# DEMANDE DE BREVET EUROPEEN

(11) **EP 4 560 504 A1**
(43) Date de publication de la demande: **28.05.2025**
(21) Numéro de dépôt: 24214515.9
(22) Date de dépôt: 21.11.2024
(51) Int. Cl.: G06F 21/44

(54) **PROCÉDÉ D'AUTHENTIFICATION**

(30) Priorité: 23.11.2023 EP 23307038; 11.03.2024 FR 2402393
(71) Demandeur: STMicroelectronics International N.V., 1228 Plan-les-Ouates, Geneva (CH)
(72) Inventeur: PEETERS, Michael, 1320 TOURINNES-LA-GROSSE (BE); DE ROCHEBOUET, Francois, 83000 TOULON (FR); MODAVE, Jean-Louis, 1340 OTTIGNIES (BE)
(74) Mandataire: Cabinet Beaumont

(57) **Abrégé**

La présente description concerne un procédé d'authentification (200) d'un premier dispositif (P) auprès d'un deuxième dispositif (V), dans lequel une signature d'un premier signal analogique dudit premier dispositif (P) est utilisée pour l'authentification.

## Description

### Domaine technique

La présente description concerne de façon générale les circuits et dispositifs électroniques, et plus particulièrement la sécurité des circuits et dispositifs électroniques. La présente description se rapporte plus précisément à la mise en oeuvre d'un procédé d'authentification permettant, par exemple, à plusieurs dispositifs électroniques de démarrer une communication fiable.

### Technique antérieure

Une communication entre deux dispositifs, ou circuits, électroniques est souvent précédée d'une phase d'authentification. Pendant cette phase, un procédé d'authentification, mis en oeuvre par les deux dispositifs, permet de vérifier si ces deux dispositifs sont autorisés à communiquer ensemble.

Les procédés d'authentification sont souvent utilisés lors de communication entre un dispositif de type terminal et un équipement ou dispositif électronique de type périphérique, par exemple un consommable ou un accessoire. Le procédé d'authentification permet, dans ce cas, de valider l'accès du dispositif de type périphérique aux données et/ou à des fonctionnalités du dispositif de type terminal. Le procédé d'authentification est un premier moyen de protection contre les dispositifs malveillants essayant d'accéder à des données et/ou à des fonctionnalités d'autres dispositifs.

Il serait souhaitable de pouvoir améliorer, au moins en partie, les procédés d'authentification connus.

### Résumé de l'invention

Il existe un besoin pour des procédés d'authentification plus sécurisés, et permettant une authentification plus fiable d'un circuit ou d'un dispositif électronique auprès d'un autre circuit ou dispositif électronique.

En particulier, il existe un besoin pour éviter qu'un clone d'un dispositif électronique puisse s'authentifier à sa place.

Il existe un besoin pour des circuits et dispositifs électroniques mettant en oeuvre des procédés d'authentification plus sécurisés.

Un mode de réalisation pallie tout ou partie des inconvénients des procédés d'authentification connus.

Un mode de réalisation prévoit un procédé d'authentification utilisant une signature d'un signal analogique d'un dispositif électronique comme moyen d'identification.

Un mode de réalisation prévoit un procédé d'authentification d'un premier dispositif auprès d'un deuxième dispositif, dans lequel une signature d'un premier signal analogique dudit premier dispositif est utilisée pour l'authentification.

Un autre mode de réalisation prévoit un système d'authentification d'un premier dispositif auprès d'un deuxième dispositif, dans lequel une signature d'un premier signal analogique dudit premier dispositif est utilisée pour l'authentification.

Selon un mode de réalisation, ladite signature correspond à l'évolution temporelle d'au moins une grandeur physique associée audit premier signal pendant la mise en oeuvre d'au moins une opération spécifique.

Selon un mode de réalisation, ladite opération est la mise en oeuvre d'une fonction électronique ou d'un programme.

Selon un mode de réalisation, ladite signature est obtenue par au moins un circuit de mesure dudit signal analogique.

Selon un mode de réalisation, ledit au moins un circuit de mesure fait partie dudit premier dispositif, dudit deuxième dispositif, ou d'un troisième dispositif électronique externe auxdits premier et deuxième dispositifs.

Selon un mode de réalisation, pendant la mise en oeuvre de ladite opération, le premier dispositif est dans un mode sécurisé.

Selon un mode de réalisation, ledit deuxième dispositif vérifie ladite signature en utilisant au moins un modèle de signature.

Selon un mode de réalisation, ledit deuxième dispositif vérifie ladite signature en la comparant avec ledit au moins un modèle de signature.

Selon un mode de réalisation, ledit deuxième dispositif vérifie ladite signature en extrayant des données de ladite signature.

Selon un mode de réalisation, ledit deuxième dispositif vérifie ladite signature en utilisant un réseau de neurones.

Selon un mode de réalisation, ledit réseau de neurones a été entraîné sur la base de données représentant des modèles de signature.

Selon un mode de réalisation, lorsque ladite signature est transmise entre les premier et deuxième dispositifs, ladite signature est chiffrée.

Selon un mode de réalisation, le procédé d'authentification est de type Vérificateur/Prouveur.

Selon un mode de réalisation, le système d'authentification est de type Vérificateur/Prouveur.

Selon un mode de réalisation, une signature d'au moins un deuxième signal analogique dudit premier dispositif est utilisée pour l'authentification.

Selon un mode de réalisation, ledit premier signal est un courant de surplus rejeté par un circuit de lissage de courant d'un circuit d'alimentation dudit premier dispositif.

Selon un mode de réalisation, ledit circuit d'alimentation dudit premier dispositif comprend un convertisseur analogique numérique adapté à mesurer ledit courant de surplus,
ledit convertisseur analogique numérique étant adapté à stocker des données dans une mémoire.

Un autre mode de réalisation prévoit un dispositif électronique adapté à être le premier dispositif dans le procédé décrit précédemment, ou dans le système décrit précédemment.

Un autre mode de réalisation prévoit un dispositif électronique adapté à être le deuxième dispositif dans le procédé décrit précédemment, ou dans le système décrit précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un exemple de dispositif électronique adapté à mettre en oeuvre les mode de mise en oeuvre de procédé d'authentification décrits en relation avec les figures 2 et 3 ;
la figure 2 représente un schéma bloc illustrant un premier mode de mise en oeuvre d'un procédé d'authentification d'un premier dispositif auprès d'un deuxième dispositif ;
la figure 3 représente un schéma bloc illustrant un deuxième mode de mise en oeuvre d'un procédé d'authentification d'un premier dispositif auprès d'un deuxième dispositif ;
La figure 4 représente, très schématiquement et sous forme de bloc, un exemple de réalisation d'un circuit d'alimentation d'un dispositif électronique ;
La figure 5 représente, très schématiquement et sous forme de bloc, un autre exemple de réalisation d'un circuit d'alimentation d'un dispositif électronique ;
la figure 6 représente un schéma bloc illustrant un troisième mode de mise en oeuvre d'un procédé d'authentification d'un premier dispositif auprès d'un deuxième dispositif.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concernent la mise en oeuvre d'un procédé d'authentification permettant d'authentifier un premier dispositif électronique auprès d'un deuxième dispositif électronique, par exemple, en vue d'une future communication entre ces premier et deuxième dispositifs. Ces modes de réalisation sont, plus particulièrement, des procédés d'authentification du type Vérificateur/Prouveur (Verifier/Prover), aussi appelé de type Vérificateur/Candidat, dans lequel un dispositif vérificateur, ici le deuxième dispositif, envoie une donnée au dispositif prouveur, ici le premier dispositif, pour qu'il lui applique une transformation. Le dispositif prouveur renvoie ensuite le résultat de ladite transformation au dispositif vérificateur pour qu'il le vérifie. Si le résultat de la vérification est correct alors le dispositif prouveur est authentifié auprès du dispositif vérificateur.

On appelle système d'authentification un système électronique comprenant un dispositif vérificateur et un dispositif prouveur.

Un des objectifs poursuivis par ces modes de réalisation est de proposer des procédés d'authentification plus sécurisés et plus fiables, et notamment des procédés d'authentification adaptés à différencier un dispositif électronique d'un de ses clones. On appelle "clone", un dispositif électronique fabriqué pour avoir le même fonctionnement/ comportement qu'un autre dispositif dans le but de prendre sa place, par exemple à des fins malveillantes.

La solution apportée par les modes de réalisation décrits ci-après est d'utiliser une signature d'un signal analogique du premier dispositif pour l'authentifier auprès du deuxième dispositif. On appelle "signature d'un signal analogique", l'enregistrement de l'évolution temporelle d'une ou plusieurs grandeurs physiques associées audit signal analogique pendant la mise en oeuvre, par le premier dispositif, d'au moins une opération spécifique, comme la mise en oeuvre d'une fonction électronique ou d'un programme. Cette grandeur peut être son amplitude en tension, en courant, sa fréquence, etc, des exemples sont détaillés ci-après. Selon les modes de réalisation décrits, cette signature est obtenue à l'aide d'un ou plusieurs circuits de mesure faisant partie du premier dispositif, du deuxième dispositif, ou d'un troisième dispositif externe aux premier et deuxième dispositifs. Cette signature est fournie au deuxième dispositif qui la vérifie, en utilisant, par exemple, un ou plusieurs modèles de signature. Selon un mode de réalisation particulier, le deuxième dispositif peut utiliser un réseau de neurones pour vérifier, par exemple classifier, voire comparer, tout ou partie de la signature fournie avec le ou les modèles de signature.

L'utilisation d'une telle signature analogique permet de différencier un dispositif électronique d'un de ses clones. En effet, l'évolution temporelle d'un signal analogique ne dépend pas seulement de l'opération mise en oeuvre par le dispositif, mais dépend aussi de la réalité matérielle du dispositif, comme de la disposition des composants électroniques qui le composent, de procédés de fabrication utilisés, etc. Ainsi, plusieurs dispositifs électroniques provenant d'un même fabriquant auront des signatures très similaires, voire identiques, mais un clone aura, très certainement, une signature différente.

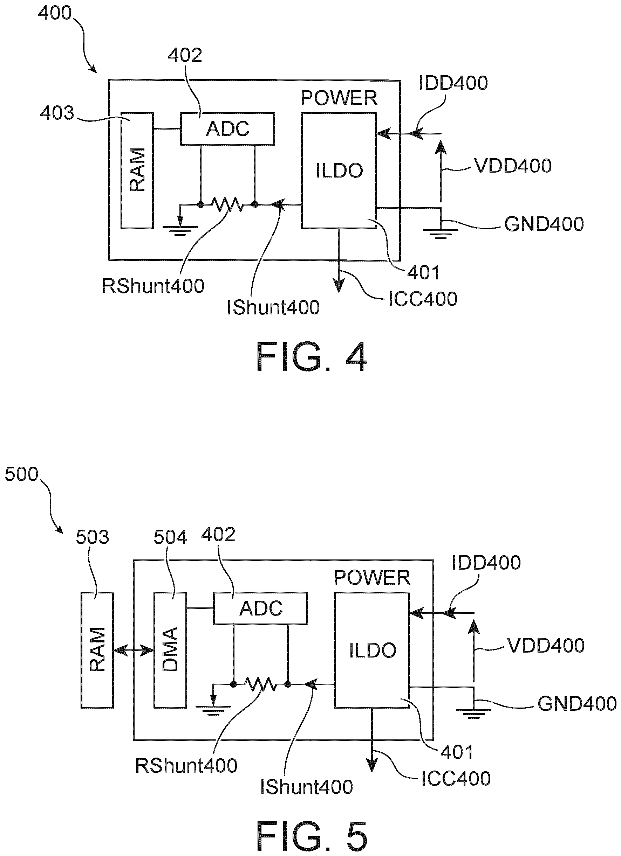

Une solution particulière proposée par les modes de réalisation décrits ci-après, est de générer une signature en utilisant un courant rejeté par un circuit de lissage de courant du dispositif prouveur. Un tel circuit de lissage de courant est utilisé pour lisser un courant d'alimentation d'un dispositif électronique. Ce type de circuit est utilisé pour éviter des attaques par canaux cachés qui permettent de récupérer des données à partir, entre autres, d'un courant d'alimentation. Un circuit de lissage de courant rejette généralement un courant de surplus correspondant à la différence entre un courant fixe et le courant d'alimentation. Ces modes de réalisation sont décrits en relation avec les figures 4 à 6.

De plus, les modes de réalisation décrits ci-après sont tout particulièrement adaptés à servir pour tout type de système nécessitant l'authentification de deux circuits ou dispositifs électroniques, comme, par exemple, un système comprenant dispositif de type terminal et un dispositif de type périphérique ou consommable, ou comme, par exemple, un système formé sur une même puce comprenant plusieurs circuits électroniques.

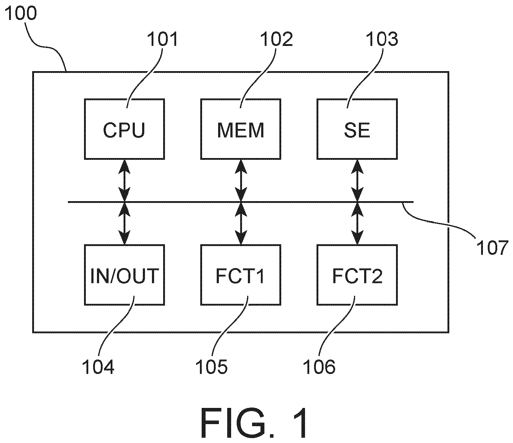

La figure 1 est un schéma bloc représentant, très schématiquement, une architecture d'un exemple d'un dispositif électronique 100 adapté à mettre en oeuvre un procédé d'authentification selon un mode de réalisation. Le dispositif 100 peut être, indifféremment, un dispositif vérificateur ou un dispositif prouveur dudit procédé d'authentification.

Selon un exemple, le dispositif électronique 100 comprend un processeur 101 (CPU) adapté à mettre en oeuvre différents traitements de données stockées dans des mémoires et/ou fournies par d'autres circuits du dispositif 100. Selon un mode de réalisation, le processeur 101 est adapté à mettre en oeuvre un procédé d'authentification.

Selon un exemple, le dispositif électronique 100 comprend, en outre, différents types de mémoires 102 (MEM), parmi lesquelles, par exemple, une mémoire non volatile, une mémoire volatile, et/ou une mémoire morte. Chaque mémoire 102 est adaptée à stocker différents types de données.

Selon un exemple, le dispositif électronique 100 comprend, en outre, un élément sécurisé 103 (SE) adapté à traiter des données sensibles et/ou secrètes. L'élément sécurisé 103 peut comprendre son ou ses propres processeurs, son ou ses propres mémoires, etc. Selon un mode de réalisation, l'élément sécurisé 101 est adapté à mettre en oeuvre un procédé d'authentification.

Selon un exemple, le dispositif électronique 100 peut comprendre, en outre, des circuits d'interface 104 (IN/OUT) adaptés à envoyer et/ou à recevoir des données provenant de l'extérieur du dispositif 100. Les circuits d'interface 104 peuvent être, en outre, adaptés à mettre en oeuvre un affichage de données, par exemple, un écran d'affichage.

Selon un exemple, le dispositif électronique 100 comprend, en outre, différents circuits 105 (FCT1) et 106 (FCT2) adaptés à réaliser différentes fonctions. A titre d'exemple, les circuits 105 et 106 peuvent comprendre des circuits de mesures, des circuits de conversion de données, etc. Selon un mode de réalisation, les circuits 105 et 106 peuvent comprendre un ou plusieurs circuits adaptés à mettre en oeuvre un procédé d'authentification. Selon un mode de réalisation particulier, les circuits 105 peuvent comprendre de circuits de mesure, des convertisseurs analogique-numérique, des circuits de calculs, etc.

Selon un exemple, le dispositif électronique 100 comprend, en outre, un ou plusieurs bus de données 107 adaptés à transférer des données entre ses différents composants.

Selon un mode de réalisation, un système comprenant deux dispositifs du type du dispositif 100 peut être adapté à mettre en oeuvre un procédé d'authentification selon un mode de réalisation. Un tel système est appelé un système d'authentification.

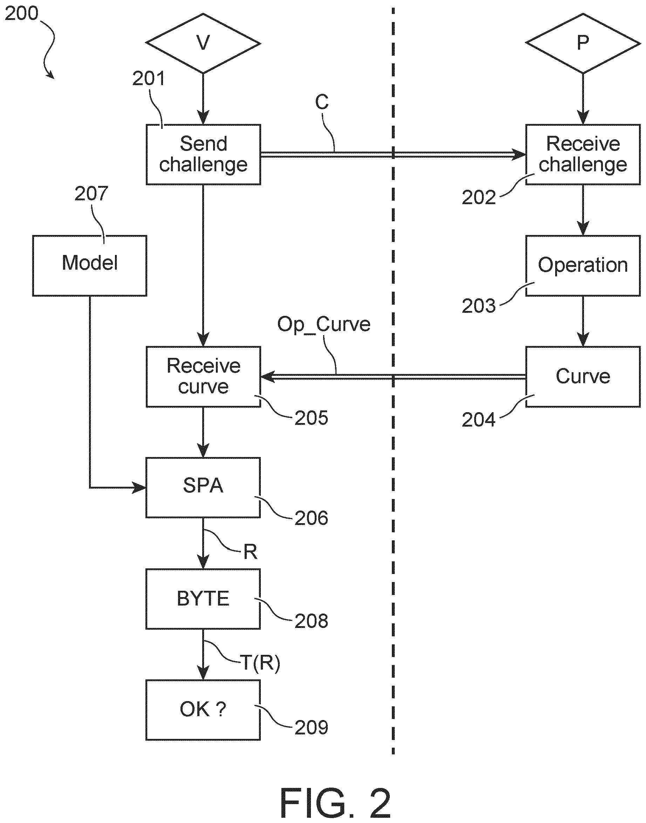

La figure 2 est un schéma bloc illustrant un premier mode de mise en oeuvre d'un procédé d'authentification 200 permettant d'authentifier un premier dispositif électronique P, aussi appelé dispositif prouveur P, auprès d'un deuxième dispositif électronique V, aussi appelé dispositif vérificateur V. Autrement dit, le procédé d'authentification 200 est adapté à être mis en oeuvre par un système d'authentification comprenant les dispositifs P et V. Selon un mode de réalisation, les dispositifs P et V sont du type du dispositif 100 décrit en relation avec la figure 1.

Comme décrit précédemment, le procédé d'authentification 200 est un procédé de type Vérificateur/Prouveur.

A une étape initiale 201 (Send Challenge),le procédé d'authentification 200 commence, pour cela le dispositif vérificateur V sélectionne une donnée C, aussi appelée donnée de défi C (Challenge Data), ou encore challenge C, pour l'envoyer au dispositif prouveur P. Selon un exemple, le challenge C est un ensemble de données binaires.

Selon un mode de réalisation, la donnée C est choisie parmi un groupe fini de données permettant de mettre en oeuvre le procédé d'authentification 200, selon un mode de réalisation la taille du groupe est déterminée par le format des données qu'il comprend, par exemple des données binaires de 128 bits. Selon un exemple, le groupe peut comprendre des données d'initialisation de l'opération spécifique mise en oeuvre par le dispositif prouveur P, par exemple générées de manière aléatoire ou pseudo-aléatoire en utilisant un modèle de fuite. Selon un exemple, lorsque l'opération spécifique est l'utilisation d'un algorithme de chiffrement de type AES, les données peuvent des couples de données comportant une valeur d'entrée et une clé de chiffrement. Selon un autre exemple, le groupe peut comprendre données chiffrées.

A une étape 202 (Receive Challenge), successive à l'étape 201, le dispositif prouveur P reçoit la donnée C et peut commencer à mettre en oeuvre le procédé d'authentification de son côté.

A une étape 203 (Operation), successive à l'étape 202, le dispositif prouveur P utilise la donnée C pour mettre en oeuvre une opération spécifique. Selon un mode de réalisation, cette opération est la mise en oeuvre d'une fonction électronique, comme un circuit spécifique du dispositif P, ou d'un programme. Selon un mode de réalisation, cette opération est une opération comprenant un schéma de fonctionnement propre au dispositif prouveur P, c'est-à-dire dépendant de la structure du dispositif prouveur P ou de son procédé de fabrication. Selon un mode de réalisation, cette opération est une opération qui laisse fuiter des données. De plus, l'utilisation de la donnée C doit avoir une influence sur le fonctionnement et/ou le résultat de l'opération.

Selon un exemple, l'opération spécifique consiste en l'application d'un algorithme de chiffrement de données, par exemple en utilisant la donnée C comme clé de chiffrement, ou par exemple en appliquant cet algorithme à la donnée C. Selon un exemple particulier, l'opération spécifique consiste en l'application d'un algorithme de type AES (Advanced Encryption Standard).

Selon un mode de réalisation particulier, pendant la mise en oeuvre de l'opération spécifique, le dispositif prouveur P est dans un mode sécurisé, lui permettant d'être moins sensible aux attaques extérieures.

A une étape 204 (Curve), successive à l'étape 203, un ou plusieurs circuits de mesure du dispositif prouveur P sont mis en oeuvre pour obtenir une signature Op_Curve d'au moins un signal analogique du dispositif prouveur P pendant la mise en oeuvre de l'opération spécifique de l'étape 203. On appelle ici signature d'un signal analogique, l'évolution temporelle d'une ou plusieurs grandeurs physiques associés audit signal analogique pendant une durée donnée. Dans le cas présent, la signature Op_Curve du signal analogique est relevée pendant la mise en oeuvre de l'opération spécifique. Pour obtenir une telle signature un ou plusieurs signaux analogiques peuvent être utilisés, séparément ou en étant combinés. Selon un mode de réalisation, le ou les circuits de mesure du dispositif P peuvent mesurer la signature d'un ou plusieurs signaux analogiques.

Selon un premier exemple, le ou les signaux analogiques mesurés par les circuits de mesure du dispositif P peuvent provenir de circuits analogiques du dispositif P, comme des amplificateurs (amplifiers), des oscillateurs (oscillators), des circuits de cadencement (timing circuit), et/ou des circuits de retard (delays/time). Dans ce cas, les circuits de mesure peuvent permettre de mesurer l'évolution temporelle de la tension, du courant, de la fréquence, et/ou du déphasage de ces signaux analogiques. Voici une liste non exhaustive de signaux analogique pouvant être utilisés dans ce cas :
- une tension d'alimentation interne du dispositif prouveur P ;
- un signal d'horloge interne du dispositif prouveur P ;
- un signal analogique provenant d'un circuit d'interface du dispositif prouveur P ; et/ou
- un signal analogique provenant d'une mémoire vive ou d'une mémoire non volatile du dispositif prouveur P.

Selon un deuxième exemple, le ou les signaux analogiques mesurés par les circuits de mesure du dispositif P peuvent provenir de l'alimentation des différents circuits composant le dispositif prouveur P. Ainsi, les alimentations concernées peuvent être les alimentations d'un processeur (CPU), d'une ou plusieurs mémoires, ou même l'alimentation générale du dispositif P. Dans ce cas, les circuits de mesure peuvent permettre de mesurer l'évolution temporelle de la tension ou du courant de ces alimentations.

Selon un troisième exemple, le ou les signaux analogiques mesurés par les circuits de mesure du dispositif P peuvent provenir de l'activité de transistors compris dans les circuits composants le dispositif P. Ainsi, les transistors concernées peuvent être des transistors du processeur, des transistors de circuits mettant en oeuvre des fonctionnalités particulièrement, comme les circuits 105 décrits en relation avec la figure 1, ou même des transistors faisant partie de la puce formant le dispositif P. Dans ce cas, les circuits de mesure peuvent permettre de mesurer l'évolution temporelle de l'émission de photons de ces transistors, en utilisant, par exemple, des diodes à effet d'avalanche déclenchée par un photon individuel et des procédés de calculs associés. Les circuits de mesure peuvent, en outre, permettre de mesurer l'évolution temporelle des émissions électromagnétique de ces transistors, en utilisant, par exemple, des micro-bobines sur couche métallique (micro-self on métal layer).

Une fois la signature Op_Curve du ou des signaux analogiques est obtenue, le dispositif prouveur P l'envoie au dispositif vérificateur. Selon un mode de réalisation, le dispositif prouveur P peut envoyer ladite signature Op_Curve de manière sûre, par exemple en la chiffrant.

A une étape 205 (Receive Curve), successive à l'étape 204, le dispositif vérificateur V reçoit la signature du dispositif prouveur P.

A une étape 206 (SPA), successive à l'étape 205 et à une étape 207 (Model), le dispositif vérificateur V vérifie la signature Op_Curve reçue en la vérifiant en utilisant un ou plusieurs modèles de signature connus, par exemple en comparant à l'un de ces modèles, ou en extrayant des données de cette signature. Cette vérification peut être mise en oeuvre, par exemple, en utilisant une analyse simple de puissance ou de courant (SPA - Simple Power Analysis), ou, par exemple, une attaque par "modèles de comportement" (Template attacks) pour laquelle des données extraites d'une courbe permettent de retrouver le modèle de courbe utilisé. Pour mettre en oeuvre une telle attaque des modèles de courbes sont générés en effectuant des tests sur des milliers de circuits de référence, et en détectant des points d'intérêt sur ces courbes, ou de classer par ordre décroissant de probabilité les valeurs extraites, ou fuitées, possibles.

Selon exemple préféré, la vérification de l'étape 206 peut être mise en oeuvre en utilisant une intelligence artificielle, comme un réseau de neurones entraîné à partir du ou des modèles. L'utilisation d'un réseau de neurones présente l'avantage d'être plus difficile à appréhender pour quelqu'un qui souhaite comprendre l'étape 206. En effet, l'analyse de la structure d'un circuit mettant en oeuvre un réseau de neurones ne permet pas de comprendre le ou les opérations qu'il exécute.

De plus, à l'étape 206, selon une variante, le dispositif vérificateur V peut prendre en compte la donnée C.

A la fin de l'étape 206, le dispositif vérificateur V obtient une donnée de résultat R.

A l'étape 207, précédant l'étape 206, le ou les modèles de signature ont été obtenues, par exemple en obtenant des signatures avec plusieurs dispositifs provenant d'un même lot de fabrication dans une usine de plusieurs dispositifs prouveur du type du dispositif P.

A une étape 208 (BYTE), optionnelle et successive à l'étape 206, la donnée de résultat R est modifiée, par exemple en étant tronquée, en une donnée T(R).

A une étape 209 (Ok ?), successive à l'étape 208, la dispositif vérificateur V utilise la donnée T(R) pour conclure sur l'authentification, ou non, du dispositif prouveur P. Dans le cas où l'étape 208 n'est pas mise en oeuvre, c'est la donnée de résultat R qui est utilisée à l'étape 209.

Comme dit précédemment, un avantage d'utiliser une signature d'un ou plusieurs signaux analogiques d'un dispositif électronique pour l'authentifier est que cela peut permettre de différencier un clone d'un véritable dispositif.

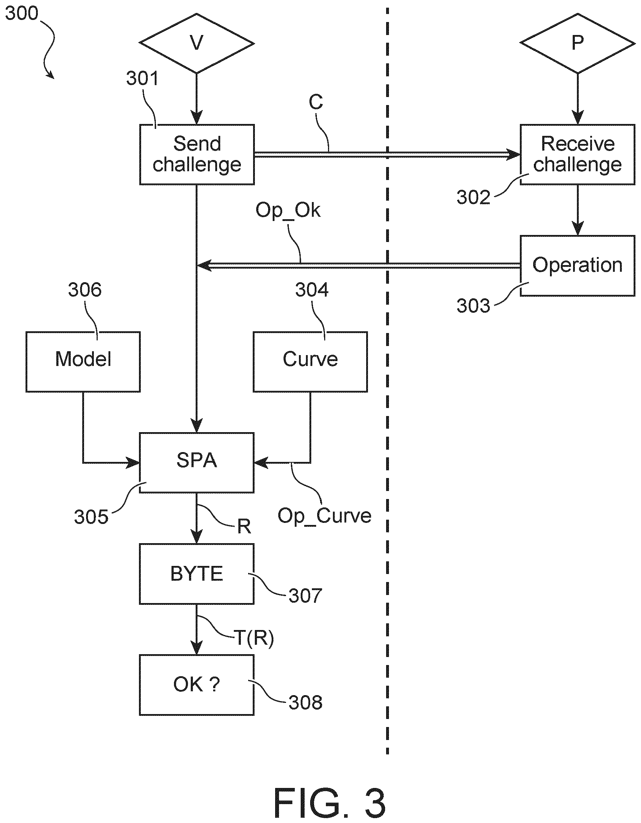

La figure 3 est un schéma bloc illustrant un deuxième mode de mise en oeuvre d'un procédé d'authentification 300 permettant d'authentifier un premier dispositif électronique P, aussi appelé dispositif prouveur P, auprès d'un deuxième dispositif électronique V, aussi appelé dispositif vérificateur V. Autrement dit, le procédé d'authentification 300 est adapté à être mis en oeuvre par un système d'authentification comprenant les dispositifs P et V. Selon un mode de réalisation, les dispositifs P et V sont du type du dispositif 100 décrit en relation avec la figure 1.

Le procédé d'authentification 300 présente des éléments similaires au procédé d'authentification 200 décrit en relation avec la figure 2. Les éléments communs aux procédés 200 et 300 ne sont pas décrits en détails de nouveau ci-après, et seuls les différences entre les dispositifs 200 et 300 sont mises en exergue.

Plus particulièrement, dans le procédé d'authentification 300, les circuits de mesure permettant d'obtenir la signature d'un ou plusieurs signaux analogiques du dispositif prouveur ne sont pas disposés à bord du dispositif prouveur P, mais à bord du dispositif vérificateur V.

Ainsi, le procédé d'authentification 300 comprend les étapes successives suivantes :
- une étape initiale 301 (Send Challenge) identique à l'étape 201 du procédé 200 ;
- une étape 302 (Receive Challenge) identique à l'étape 202 du procédé 200 ;
- une étape 303 (Operation) similaire à l'étape 203 du procédé 200 ;
- une étape 304 (Curve) similaire à l'étape 204 du procédé 200 mais mise en oeuvre par le dispositif vérificateur V ;
- une étape 305 (SPA) identique à l'étape 206 du procédé 200 ;
- une étape 306 (Model) identique à l'étape 207 du procédé 200 ;
- une étape 307 (BYTE) identique à l'étape 208 du procédé 200 ; et
- une étape 308 (Ok ?) identique à l'étape 209 du procédé 200.

Dans le cas du procédé 300, l'étape 303 comprend, en outre, l'envoi d'une donnée au dispositif vérificateur indiquant que l'opération a été mise en oeuvre avec succès, ou, permettant au dispositif vérificateur V de vérifier que cette opération a été effectuée avec succès. Selon un exemple, l'opération spécifique de l'étape 203 peut être une opération de chiffrement de la donnée C avec une clé de chiffrement, et la réponse envoyée peut comprendre la donnée chiffrée.

La figure 4 représente, très schématiquement et sous forme de blocs, un exemple de réalisation d'un circuit d'alimentation en énergie 400 d'un dispositif électronique du type du dispositif électronique 100 décrit en relation avec la figure 1.

Selon un exemple, le circuit d'alimentation 400 est adapté à recevoir une tension d'alimentation VDD400, un courant d'alimentation IDD400 constant, et un potentiel de référence GND400, par exemple la masse. Selon un mode de réalisation, le circuit d'alimentation est adapté à fournir un courant d'alimentation ICC400.

Selon un mode de réalisation, le circuit d'alimentation 400 comprend un circuit de lissage de courant 401 (ILDO) adapté à recevoir le courant IDD400 constant et à fournir, en sortie le courant d'alimentation ICC400. Le circuit 401 rejette, en outre, un courant de surplus IShunt400 correspondant à la différence entre les courants d'alimentation IDD400 et ICC400. Ce courant de surplus IShunt400 peut être utilisé pour analyser l'activité du dispositif électronique comprenant le circuit d'alimentation 400. En effet, le véritable courant d'alimentation utilisé par le dispositif n'étant pas accessible, seule la différence entre le courant d'alimentation constant IDD400 et le courant ICC400, c'est-à-dire le courant IShunt400 montre les fluctuations de l'alimentation du dispositif électronique.

Selon un exemple, le circuit d'alimentation 400 comprend une résistance RShunt400 permettant de dissiper le courant de surplus IShunt400. La résistance RShunt400 est reliée entre le circuit 401 et une borne recevant le potentiel de référence GND400.

Selon un exemple, le circuit d'alimentation 400 comprend un convertisseur analogique numérique 402 (ADC) disposé de façon à permettre de mesurer le courant de surplus IShunt400. Ainsi, le convertisseur 402 est relié aux bornes de la résistance RShunt400.

Selon un mode de réalisation, le circuit d'alimentation 400 comprend une mémoire 403 (RAM) dans laquelle le convertisseur 402 est adapté à stocker des données, ces données correspondant aux mesures du courant IShunt400.

La figure 5 représente, très schématiquement et sous forme de blocs, un autre exemple de réalisation d'un circuit d'alimentation en énergie 500 d'un dispositif électronique du type du dispositif électronique 100 décrit en relation avec la figure 1.

Le circuit d'alimentation 500 présente des éléments similaires au circuit d'alimentation 400 décrit en relation avec la figure 4. Les éléments communs aux circuits 400 et 500 ne sont pas décrits en détails de nouveau ci-après. Seules les différences entre les dispositifs 400 et 500 sont mises en exergue.

La différence entre les circuits 400 et 500 est que, dans le circuit 500, le convertisseur analogique numérique est adapté à stocker des données dans une mémoire qui est externe au circuit 500.

Ainsi, comme le circuit 400, le circuit 500 comprend :
- le circuit de lissage de courant 401 (ILDO) ;
- la résistance RShunt400 ; et
- le convertisseur analogique numérique 402 (ADC).

Selon un mode de réalisation, le circuit d'alimentation 500 comprend un circuit 504 (DMA) d'accès direct en mémoire (Direct Access Memory) permettant d'accéder à une mémoire 503 (RAM) externe au circuit d'alimentation 500. Le convertisseur 402 est adapté à stocker des données dans la mémoire 503 en utilisant le circuit 504.

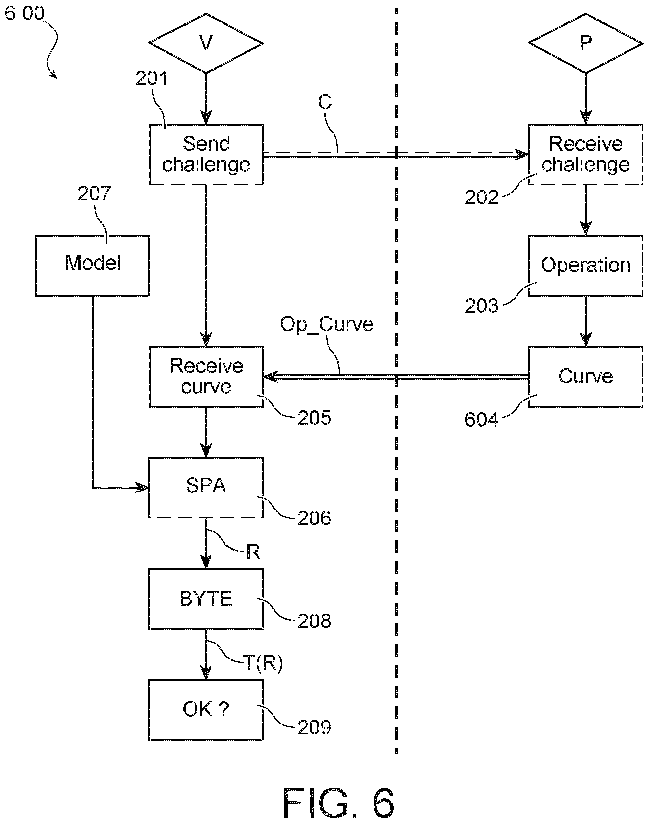

La figure 6 est un schéma bloc illustrant un troisième mode de mise en oeuvre d'un procédé d'authentification 600 permettant d'authentifier un premier dispositif électronique P, aussi appelé dispositif prouveur P, auprès d'un deuxième dispositif électronique V, aussi appelé dispositif vérificateur V. Autrement dit, le procédé d'authentification 600 est adapté à être mis en oeuvre par un système d'authentification comprenant les dispositifs P et V.

Selon un mode de réalisation, les dispositifs P et V sont du type du dispositif 100 décrit en relation avec la figure 1. De plus, selon un mode de réalisation le dispositif P comprend un circuit d'alimentation du type du circuit 400 décrit en relation avec la figure 4 ou du type du circuit 500 décrit en relation avec la figure 5.

Le procédé d'authentification 600 présente des éléments similaires au procédé d'authentification 200 décrit en relation avec la figure 2. Les éléments communs aux procédés 200 et 600 ne sont pas décrits en détails de nouveau ci-après, et seuls les différences entre les dispositifs 200 et 600 sont mises en exergue.

Plus particulièrement, dans le procédé d'authentification 600, la signature d'un ou plusieurs signaux analogiques du dispositif prouveur est une mesure du courant de surplus IShunt400 du circuit d'alimentation du dispositif P.

Ainsi, le procédé d'authentification 600 comprend les étapes successives suivantes :
- l'étape 201 (Send Challenge) ;
- l'étape 202 (Receive Challenge) ;
- l'étape 203 (Operation) ;
- une étape 604 (Curve) similaire à l'étape 204 du procédé 200 ;
- l'étape 205 (Receive Curve) ;
- l'étape 206 (SPA) ;
- l'étape 207 (Model) ;
- l'étape 208 (BYTE) ; et
- l'étape 209 (Ok ?).

A l'étape 604, successive à l'étape 203, le convertisseur analogique numérique 402 du circuit d'alimentation du dispositif prouveur P est mis en oeuvre pour obtenir une signature Op_Curve du courant de surplus IShunt400 du circuit 401 pendant la mise en oeuvre de l'opération spécifique de l'étape 203.

Un avantage de ce mode de réalisation est qu'il permet de contourner l'utilisation d'un circuit de lissage de courant.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les circuits de mesure permettant d'obtenir la signature Op_Curve peuvent ne faire partie ni du dispositif prouveur P, ni du dispositif vérificateur V, mais d'un dispositif externe. C'est, par exemple, le cas lorsque les dispositifs V et P sont des circuits disposés sur un même puce, les circuits de mesure peuvent être disposés sur la même puce sans faire partie ni du dispositif V, ni du dispositif P.

De plus, le procédé d'authentification pourrait comprendre une opération d'authentification du dispositif vérificateur V auprès du dispositif prouveur P avant de procéder à l'envoi de la donnée de défi C.

Enfin, la mise en oeuvre pratique des modes de réalisation et variantes décrits est à la portée de la personne du métier à partir des indications fonctionnelles données ci-dessus.

## Revendications

1. Procédé d'authentification (200 ; 300) d'un premier dispositif (P) auprès d'un deuxième dispositif (V), dans lequel une signature d'un premier signal analogique dudit premier dispositif (P) est utilisée pour l'authentification.

2. Système d'authentification d'un premier dispositif (P) auprès d'un deuxième dispositif (V), dans lequel une signature (Op_Curve) d'un premier signal analogique dudit premier dispositif (P) est utilisée pour l'authentification.

3. Procédé selon la revendication 1 ou système selon la revendication 2, dans lequel ladite signature (Op_Curve) correspond à l'évolution temporelle d'au moins une grandeur physique associée audit premier signal pendant la mise en oeuvre d'au moins une opération spécifique.

4. Procédé ou système selon la revendication 3, dans lequel ladite opération est la mise en oeuvre d'une fonction électronique ou d'un programme.

5. Procédé selon l'une quelconque des revendications 1, 3 ou 4, ou système selon l'une quelconque des revendications 2 à 4, dans lequel ladite signature (Op_Curve) est obtenue par au moins un circuit de mesure dudit signal analogique.

6. Procédé ou système selon la revendication 5, dans lequel ledit au moins un circuit de mesure fait partie dudit premier dispositif (P), dudit deuxième dispositif (V), ou d'un troisième dispositif électronique externe auxdits premier et deuxième dispositifs (P, V).

7. Procédé selon l'une quelconque des revendications 1, 3 à 6, ou système selon l'une quelconque des revendications 2 à 6, dans lequel, pendant la mise en oeuvre de ladite opération, le premier dispositif (P) est dans un mode sécurisé.

8. Procédé selon l'une quelconque des revendications 1, 3 à 7, ou système selon l'une quelconque des revendications 2 à 7, dans lequel ledit deuxième dispositif (V) vérifie ladite signature (Op_Curve) en utilisant au moins un modèle de signature.

9. Procédé selon l'une quelconque des revendications 1, 3 à 8, ou système selon l'une quelconque des revendications 2 à 8, dans lequel ledit deuxième dispositif (V) vérifie ladite signature (Op_Curve) en la comparant avec ledit au moins un modèle de signature.

10. Procédé selon l'une quelconque des revendications 1, 3 à 9, ou système selon l'une quelconque des revendications 2 à 9, dans lequel ledit deuxième dispositif (V) vérifie ladite signature (Op_Curve) en extrayant des données de ladite signature (Op_Curve).

11. Procédé ou système selon la revendication 10, dans lequel ledit deuxième dispositif (V) vérifie ladite signature (Op_Curve) en utilisant un réseau de neurones.

12. Procédé ou système selon la revendication 11, dans lequel ledit réseau de neurones a été entraîné sur la base de données représentant des modèles de signature.

13. Procédé selon l'une quelconque des revendications 1, 3 à 12, ou système selon l'une quelconque des revendications 2 à 12, dans lequel, lorsque ladite signature (Op_Curve) est transmise entre les premier et deuxième dispositifs (P, V), ladite signature (Op_Curve) est chiffrée.

14. Procédé selon l'une quelconque des revendications 1, 3 à 13, ou système selon l'une quelconque des revendications 2 à 13, d'authentification de type Vérificateur/Prouveur.

15. Procédé selon l'une quelconque des revendications 1, 3 à 14, ou système selon l'une quelconque des revendications 2 à 14, dans lequel une signature (Op_Curve) d'au moins un deuxième signal analogique dudit premier dispositif (P) est utilisée pour l'authentification.

16. Procédé selon l'une quelconque des revendications 1, 3 à 15, ou système selon l'une quelconque des revendications 2 à 15, dans lequel ledit premier signal est un courant de surplus (IShunt400) rejeté par un circuit de lissage de courant (401) d'un circuit d'alimentation (400 ; 500) dudit premier dispositif (P).

17. Procédé ou système selon la revendication 16, dans lequel ledit circuit d'alimentation (401) dudit premier dispositif (P) comprend un convertisseur analogique numérique (402) adapté à mesurer ledit courant de surplus, ledit convertisseur analogique (402) numérique étant adapté à stocker des données dans une mémoire (403 ; 503).

18. Dispositif électronique adapté à être le premier dispositif (P) dans le procédé selon l'une quelconque des revendications 1, 3 à 17, ou dans le système selon l'une quelconque des revendications 2 à 17.

19. Dispositif électronique adapté à être le deuxième dispositif (V) dans le procédé (200 ; 300) selon l'une quelconque des revendications 1, 3 à 17, ou dans le système selon l'une quelconque des revendications 2 à 17.
